# EUROPÄISCHE PATENTSCHRIFT

(11) **EP 3 670 371 B1**
(45) Veröffentlichungstag und Bekanntmachung des Hinweises auf die Patenterteilung: **24.03.2021**
(21) Anmeldenummer: 18215306.4
(22) Anmeldetag: 21.12.2018
(51) Int. Cl.: B65D 6/18, B65D 21/02, B65D 21/06, B65D 85/76

(54) **BEHÄLTER MIT EINEM KLAPPBAREN BODENABSCHNITT**
CONTAINER WITH A HINGED BASE SECTION
RÉCIPIENT POURVU D'UNE SECTION DE SOL RABATTABLE

(43) Veröffentlichungstag der Anmeldung: 24.06.2020
(60) Teilanmeldung: 19213560.6
(73) Patentinhaber: Schoeller Allibert GmbH, 19057 Schwerin (DE)
(72) Erfinder: VOS, Theodoor Henk Vincent, 7881 RN Emmer-Compascuum (NL); MARCO RIVERO, Jose Luis, 28240 Madrid (NL); DURAN SOLER, Ricard, 08224 Barcelona (ES)
(74) Vertreter: Winter, Brandl, Fürniss, Hübner, Röss, Kaiser, Polte - Partnerschaft mbB

(56) Entgegenhaltungen:
- EP-A1- 0 470 035
- EP-A1- 0 573 729
- EP-A1- 0 997 382
- WO-A1-97/15502
- DE-A1- 4 323 516
- JP-A- 2013 001 404

## Beschreibung

### Technisches Gebiet

Die vorliegende Erfindung bezieht sich auf einen Behälter, insbesondere einen Behälter zur Käsereifung, mit einem Boden, von dem Ecksäulen und / oder Randsäulen im Wesentlichen senkrecht emporragen und den Behälter seitlich begrenzen.

### Stand der Technik

Im Stand der Technik sind Behälter mit Ecksäulen und / oder Randsäulen bekannt. Ecksäulen bezeichnen dabei Verstärkungssäulen, die in den Eckbereichen des Behälterbodens angeordnet sind und Randsäulen bezeichnen Verstärkungssäulen, die in den zwischen den Eckbereichen liegenden Randbereichen des Behälterbodens angeordnet sind. Solche Eck-, oder Randsäulen sind oftmals als Hohlsäulen ausgeführt und haben den Vorteil, dass durch sie hohe Stapellasten übertragen werden können. Ferner können Mittensäulen vorgesehen sein, die aus einem inneren Flächenabschnitt des Behälterbodens emporragen. Ein beispielhaftes Anwendungsgebiet solcher Eck-, Rand- oder Mittensäulen in Behältern ist das Gebiet der Käsereifung, in welchem spezialisierte Behälter zu hohen modularen Regalen gestapelt werden und dabei schwere Käselaibe tragen müssen. Bei solchen spezialisierten Käsetrays werden die Eck-, Rand- oder Mittensäulen oftmals so angeordnet, dass die Bodenpartie der Trays in eine Anzahl von Abteilen für je einen Käselaib unterteilt wird. Neben dem Tragen von Stapellasten, verhindern die Eck-, Rand- oder Mittensäulen in solchen spezialiserten Käsetrays, dass die Käselaibe bei der Reifung aneinander anliegen, erfüllen also eine Abstandshalter-Funktion. Ferner kann seitlich zwischen den Säulen ungehindert Luft ins Behälterinnere gelangen.

Ein schon seit langem bestehendes Problem solcher Behälter mit Eck-, Rand- und / oder Mittensäulen ist, dass die leeren Behälter ein hohes Transportvolumen einnehmen, da sie in der Regel als massiv konstruierte starre Einheiten ausgeführt und nicht zerlegbar oder anderweitig komprimierbar sind.

Aus den Druckschriften JP 2013 001404 A und EP 0 573 729 A1 sind Behälter bekannt, bei denen die Säulen vom Boden bzw. von den Seitenwänden entfernt werden können, um anschließend die Seitenwände falten zu können.

### Offenbarung der Erfindung

Aufgabe der vorliegenden Erfindung ist es deshalb einen Behälter mit Eck- und/oder Randsäulen, insbesondere einen Behälter zur Käsereifung, mit für den Leertransport reduzierbarem Leervolumen bereitzustellen.

Diese Aufgabe wird durch Merkmale des unabhängigen Anspruchs 1 sowie die Merkmale des nebengeordneten Anspruchs 13 gelöst. Vorteilhafte Weiterbildungen sind Gegenstand der Unteransprüche.

Erfindungsgemäß ist ein Behälter, insbesondere ein Behälter zur Käsereifung, vorgesehen, der einen Boden aufweist, von dem Ecksäulen und/oder Randsäulen im Wesentlichen senkrecht emporragen und den Behälter seitlich begrenzen. Der Boden des Behälters weist dabei eine, insbesondere zentrale/mittige, Bodenplatte und zumindest einen mit der Bodenplatte gelenkig an einer ihrer Seitenkanten verbundenen Bodenrandabschnitt auf, auf dem zumindest eine Ecksäule und/oder Randsäule angeordnet ist und der zusammen mit der zumindest einen Ecksäule und/oder Randsäule von einer aufgebauten/ausgeklappten Stellung (in der die zumindest eine Säule senkrecht zur Bodenplatte ausgerichtet ist) aus nach innen in eine eingeklappte Stellung klappbar ist. In anderen Worten ist bei einem erfindungsgemäßen Behälter mit einem Boden und einer Anzahl von den Boden seitlich/peripher begrenzenden Verstärkungssäulen zumindest ein Randabschnitt des Bodens aus einer bodenparallelen bzw. bodenfluchtenden Lage heraus umklappbar, sodass sich die Bodenfläche verringert. Im selben Zuge klappen die auf dem Bodenrandabschnitt angeordneten Säulen mit diesem um und auf die zentrale/mittige Bodenplatte (Hauptbodenplatte) des Bodens bzw. in Richtung hin zur Bodenplatte.

Auf diese Weise lässt sich zum einen das modulare Maß des Behälters verringern (d.h. die Abmessungen des Bodens sind im eingeklappten Zustand kleiner als im aufgeklappten/aufgebauten Zustand) und zum anderen kann die Höhe des Behälters durch Einklappen der Säulen verkleinert werden. Entsprechend ergibt sich ein erheblich verringertes Transportvolumen für die zusammengeklappten Behälter trotz der vergleichsweise sperrigen Verstärkungssäulen.

Gemäß einer bevorzugten Ausführungsform der Erfindung können mehrere Ecksäulen und/oder Randsäulen auf einem klappbaren Bodenrandabschnitt angeordnet sein, insbesondere können mehrere Ecksäulen und/oder Randsäulen über den Bodenrandabschnitt starr und/oder einstückig miteinander verbunden sein. In anderen Worten können Bodenrandabschnitt und die Bodenplatte jeweils als ein starres oder im Wesentlichen starres Element ausgebildet sein, wobei auf dem Bodenrandabschnitt eine Anzahl, insbesondere integral angeformter, Ecksäulen und/oder Randsäulen angeordnet sind. Die Ecksäulen und/oder Randsäulen können insbesondere als zur Behälterunterseite hin offene Hohlsäulen in den Randabschnitten ausgebildet sein. Dies gewährleistet eine gute bzw. hinterschnittfreie Entformbarkeit der Randabschnitte bei einer Fertigung im Spritzgussverfahren. Die Verstärkungssäulen des Behälters können auch mit einem Tiefzieh- bzw. Thermoformingverfahren in die verschiedenen Bodenabschnitten eingebracht werden.

Bei einer vorstehend beschriebenen Ausführungsform der Erfindung, bei der mehrere Ecksäulen und/oder Randsäulen auf einem Bodenrandabschnitt angeordnet sind, kann bevorzugt zwischen zwei benachbarten Säulen zumindest eine Randleiste zur seitlichen Begrenzung des Bodens in der aufgebauten Stellung verlaufen. Bevorzugt können alle benachbarten Säulen des Bodenrandabschnitts jeweils durch zumindest eine Randleiste verbunden sein. Auf diese Weise bilden die auf dem klappbaren Bodenrandabschnitt ausgebildeten Ecksäulen zusammen mit den Randleisten im aufgeklappten Zustand eine Seitenbegrenzung aus. Randleisten haben gegenüber geschlossenen Wänden den Vorteil einer verbesserten Luftzirkulation für die Käsereifung.

Gemäß einem weiter bevorzugten Ausführungsbeispiel kann die zumindest eine Randleiste mit einem vertikalen Abstand zum Bodenrandabschnitt, auf dem sie angeordnet ist, zwischen den Ecksäulen verlaufend angeordnet sein, sodass ein vorbestimmter Spalt zwischen der Lagerplatte und der Randleiste definiert wird. Dies ermöglicht eine sichere Halterung des Käses in der Transport- und Lagervorrichtung bei gleichzeitig hoher Exposition zur Umgebungsluft.

Gemäß einem weiter bevorzugten Aspekt können in der zumindest einen Randleiste Lüftungsschlitze vorgesehen sein, um die Durchlüftung für die Käsereifung weiter zu erhöhen.

Gemäß einer alternativen bevorzugten Ausführungsform können zwei oder mehr Ecksäulen und/oder Randsäulen auf einem Bodenrandabschnitt angeordnet sein, die jeweils durch eine Seitenwandungsfläche verbunden sind bzw. kann sich vom Bodenrandabschnitt aus eine Behälterwandung nach oben hin erstrecken, die mit einer Anzahl an Ecksäulen und/oder Randsäulen verstärkt ist. In anderen Worten sind Ausführungsformen für andere Anwendungsgebiete mit geschlossenen Seitenwänden, die benachbarte Rand- oder Ecksäulen auf einem klappbaren Bodenrandabschnitt verbinden ebenso angedacht.

Gemäß einem weiteren bevorzugten Ausführungsbeispiel der Erfindung kann die Randleiste außenseitig zwischen benachbarten Ecksäulen und/oder Randsäulen verlaufend angeordnet sein und gegenüber den Säulen eine reduzierte Breitendimension/Wandstärke zum Behälterinneren hin aufweisen. In anderen Worten können die Ecksäulen und/oder Randsäulen und die zumindest eine Randleiste zur Behälteraußenseite hin eine im Wesentlichen bündige Außenfläche/Begrenzung erzeugen, während zur Behälterinnenseite hin die Ecksäulen und/oder Randsäulen weiter ins Behälterinnere hineinragen als die Randleiste(n). Auf diese Weise werden im aufgeklappten Zustand zwischen den benachbarten Säulen und der Randleiste von oben betrachtet eine Aussparung/Ausbuchtungen ausgebildet, und es wird zusätzlicher Lagerplatz für (im Wesentlichen kreiszylindrisch geformte) Käselaibe bereitgestellt.

Es ist bevorzugt, wenn die Bodenplatte und der zumindest eine klappbare Bodenrandabschnitt gemeinsam eine im Wesentlichen rechteckförmige Bodenpartie ausbilden. Besonders bevorzugt kann der Behälter in jeder der vier Ecken der so gebildeten Bodenpartie eine Ecksäule aufweisen.

Gemäß einem bevorzugten Ausführungsbeispiel können die Bodenplatte und der Bodenrandabschnitt in der aufgebauten Stellung mit ihren Oberseiten fluchtend angeordnet sein, um gemeinsam eine ebene BehälterBodenfläche auszubilden.

Gemäß einem weiter bevorzugten Aspekt der Erfindung kann eine Scharniervorrichtung zwischen den angrenzenden Seitenkanten/Rändern der Bodenplatte und des Bodenrandabschnitts angeordnet sein, um diese gelenkig miteinander zu verbinden. Bspw. können gängige Scharnieranordnungen mit Scharnierbuchsen und -bolzen oder Filmscharniere zum Einsatz kommen. Hierbei kann vorteilhafter Weise die durch die Scharniervorrichtung definierte Schwenkachse in einem oberen Bereich zwischen den angrenzenden Rändern der Bodenplatte und des Bodenabschnitts verlaufen, sodass die angrenzenden Ränder der Bodenplatte und des Bodenabschnitts im aufgebauten Zustand der Seitenwand im Stoß zueinander sind bzw. mit ihren Stirnseiten aneinander flächig anliegen und einen Anschlag ausbilden. Dies hat den Vorteil, dass beim Aufklappen bzw. beim Überführen des Bodenrandabschnitts in die aufgebaute Stellung eine definierte Ausrichtung der Bodenplatte und des Bodenabschnitts zueinander erzeugt werden kann. Zusätzlich erhöht eine solche Anordnung die Stabilität der Bodenpartie im aufgeklappten Zustand. In einer weiter bevorzugten Ausführungsform kann zumindest eine solche Scharnieranordnung derart ausgelegt sein, dass die durch diese definierte Schwenkachse im aufgebauten Zustand des Behälters oberhalb der Bodenfläche des Behälters verläuft. Bspw. kann hierzu ein Scharnierbolzen (oder mehrere axial fluchtende Scharnierbolzen) um eine definierte Distanz über der Bodenfläche des Behälters und in der Draufsicht über dem Spalt zwischen den angrenzenden Seitenkanten der Bodenplatte und des Bodenrandabschnitts angeordnet sein. Auf diese Weise kann die gesamte Seitenkante (in Behälterhöhenrichtung betrachtet) der Bodenplatte und des Bodenrandabschnitts im aufgebauten Zustand als Anschlag zwischen den beiden Komponenten dienen.

Gemäß einer weiter bevorzugten Ausführungsform kann die Bodenplatte rechteckförmig ausgebildet sein und an jeder ihrer Seitenkanten einen klappbaren Bodenrandabschnitt mit je zumindest einer Ecksäule und/oder Randsäule schwenkbar angelenkt sein. In diesem Fall ist es bevorzugt, wenn die einzelnen Bodenrandabschnitte jeweils auch eine rechteckförmige Grundfläche ausbilden.

Gemäß einem weiter bevorzugten Aspekt der Erfindung kann zumindest ein erstes sich gegenüberliegendes Paar von Bodenrandabschnitten, insbesondere ein Paar kurzer stirnseitiger Bodenrandabschnitte, dieselbe Kantenlänge bzw. dieselbe Breitenerstreckung aufweisen, wie die jeweiligen Seitenkanten der Bodenplatte, an denen es angelenkt ist. Bei einer solchen Ausführungsform ist es weiter von Vorteil, wenn das zweite (das verbleibende) Paar sich gegenüberliegender Bodenrandabschnitte, insbesondere ein Paar langer Bodenrandabschnitte, eine größere Kantenlänge bzw. eine größere Erstreckung in Behälterlängsrichtung aufweist, als die Seitenkanten der Bodenplatte, an der es angelenkt ist, sodass besagte zweite Bodenrandabschnitte zu beiden Seiten über die angrenzenden Eckbereiche der Bodenplatte überstehende Eckabschnitte ausbilden. Besagte überstehende Eckabschnitte können weiter bevorzugt soweit überstehen, dass sie im aufgebauten Zustand des Behälters eine bündige Bodenaußenkante mit dem ersten Paar sich gegenüberliegender (kurzer) Bodenrandabschnitte bilden. In anderen Worten kann der Behälter eine Bodenplatte mit rechteckigem Grundriss aufweisen, die an jeder ihrer vier Seitenkanten einen schwenkbaren Bodenrandabschnitt angelenkt hat, wobei die Bodenplatte und die vier daran angelenkten Bodenrandabschnitte im aufgeklappten Zustand des Behälters eine geschlossene Gesamtbodenpartie mit wiederum rechteckförmigem Grundriss ausbilden.

Gemäß einer weiter bevorzugten Ausgestaltung kann auf den überstehenden Eckabschnitten des zweiten sich gegenüberliegenden Paares von Bodenrandabschnitten je eine Ecksäule angeordnet sein, sodass der Behälter im aufgeklappten Zustand vier Ecksäulen aufweist. Bevorzugt können der Überstand der überstehenden Eckabschnitte und der Durchmesser der Ecksäulen so bemaßt sein, dass die Ecksäulen beim Einklappen der zweiten Bodenrandabschnitte die zuvor eingeklappten ersten Bodenrandabschnitte behälteraußenseitig umgreifen.

Gemäß einer weiter bevorzugten Ausführungsform kann an zumindest einer Ecksäule, insbesondere an allen vier Ecksäulen, oberseitig eine Stapelgeometrie angeordnet oder integral angeformt sein, die dazu ausgebildet ist, in eine komplementäre Stapelgeometrie an der Unterseite eines baugleichen oder kompatiblen Behälters einzugreifen. Die komplementäre Stapelgeometrie an der Unterseite kann bevorzugt eine Ausnehmung/Aussparung an der Unterseite des Bodenrandes sein. Insbesondere können hierzu die Ecksäulen, wie bereits erwähnt, als zur Behälterunterseite hin offene Hohlsäulen ausgebildet sein.

Gemäß einem weiter bevorzugten Aspekt der Erfindung können von den auf den überstehenden Eckabschnitten positionierten Ecksäulen aus rechtwinklige oder L-förmige, Seitenrandabschnitte oder vorkragende Anschläge vorspringen, die sich im aufgebauten Zustand des Behälters in Richtung hin zu den ersten Seitenbegrenzungen auf den ersten Bodenrandabschnitten erstrecken. Auf diese Weise kann trotz der überstehenden Eckabschnitte eine geschlossene Seitenbegrenzung für den gesamten Behälter erzeugt werden. Besonders bevorzugt können die rechtwinkligen oder L-förmigen Seitenrandabschnitte sich in der aufgeklappten Stellung der Seitenwände zumindest teilweise mit den angrenzenden klappbaren Seitenwänden überlappen bzw., diese behälteraußenseitig umgreifen und somit einen Anschlag ausbilden, der die Schwenkbewegung des angrenzenden ersten sich gegenüberliegenden Paares von Bodenrandabschnitten nach außen hin begrenzt. Noch weiter bevorzugt können in besagtem überlappendem Bereich Sicherungsgeometrien ausgebildet sein, die beim Aufklappen der ersten Seitenbegrenzungen in die L-förmigen Seitenrandabschnitte eingreifen und einen Formschluss herstellen, der die zweiten (längsseitigen) Seitenbegrenzungen gegen ein Umklappen nach außen hin absichert.

Gemäß einer weiter bevorzugten Ausgestaltung können die rechtwinkligen oder L-förmigen Seitenrandabschnitte des zweiten sich gegenüberliegenden Paares von Bodenrandabschnitten und die Seitenrandabschnitte des ersten sich gegenüberliegenden Paares von Bodenrandabschnitten (bzw. die auf diesen angeordneten Seitenbegrenzungenm / Seitenwände) zu einem lösbar verriegelnden Eingriff miteinander ausgebildet sein. Hierzu sind prinzipiell alle gängigen dem Fachmann bekannten Verschluss- oder Verriegelungsmechanismen aus den Bereich der Faltbehälter / Faltsteigen geeignet.

Gemäß einem weiter bevorzugten Aspekt kann das zweite sich gegenüberliegende Paar von Bodenrandabschnitten mit den überstehenden Eckabschnitten an den langen Seitenkanten der Bodenplatte angeordnet sein. In einer solchen Ausführungsform muss geometrisch bedingt beim Einklappen des Behälters zuerst das erste sich gegenüberliegende Paar von Bodenrandabschnitten (an der kurzen Seitenkanten der Bodenplatte) auf die Bodenplatte geschwenkt werden. In einer bevorzugten Ausgestaltung eines solchen Behälters kann das zweite sich gegenüberliegende Paar von Bodenrandabschnitten bevorzugt Ecksäulen und jeweils zumindest eine zwischen den Ecksäulen angeordnete Randsäule aufweisen. Hierbei ist es von Vorteil, wenn der Abstand zwischen jeder Ecksäule und der nächstliegenden Randsäule der beiden zweiten Bodenrandabschnitte derart konstruktiv auf die Höhenerstreckung der Säulen des ersten Paares gegenüberliegender Bodenrandabschnitte angepasst ist, dass, wenn das zweite Paar gegenüberliegender Bodenrandabschnitte auf das erste Paar gegenüberliegender Bodenrandabschnitte geklappt wird, das erste Paar gegenüberliegender Bodenrandabschnitte jeweils zwischen den Ecksäulen und den zu den Ecksäulen benachbarten Randsäulen des zweiten Paares gegenüberliegender Bodenrandabschnitte aufgenommen wird. Anders ausgedrückt können die in dem zweiten Paar gegenüberliegender Bodenrandabschnitte zwischen den benachbarten Ecksäulen und Randsäulen und den dazwischen verlaufenden Randleisten ausgebildeten Aussparungen/Ausbuchtungen derart konstruktiv angepasst/bemaßt sein, dass sie die auf die Bodenplatte geklappten ersten Bodenrandabschnitte samt der darauf angeordneten Säulen in sich aufnehmen können. Weiter bevorzugt kann die Tiefenerstreckung des ersten Paares gegenüberliegender Bodenrandabschnitte (der Abstand zwischen Bodenaußenkante im aufgebauten Zustand und der an den Bodenrandabschnitt angrenzenden Kante der Bodenplatte) derart mit der Tiefenerstreckung des zweiten Paares gegenüberliegender Bodenrandabschnitte sowie der Einrückung/Ausbuchtung der Randleiste relativ zu den Ecksäulen und Randsäulen des zweiten Paares gegenüberliegender Bodenrandabschnitte derart abgestimmt sein, dass die Randleisten des zweiten Paares gegenüberliegender Bodenrandabschnitte beim Umklappen auf der Außenfläche der Säulen und Randleisten des ersten Bodenrandabschnitts zum Aufliegen kommen. Auf diese Weise können die Seitenbegrenzungen (Säulen und Randleisten) oder Seitenwände der zweiten Bodenrandabschnitte in eine möglichst Bodenparallele Ausrichtung überführt werden.

Gemäß einem bevorzugten Aspekt können die Bodenplatte und / oder der Bodenrandabschnitt der zumindest einen Seitenwand gitterrostförmig ausgebildet sein, um die Durchlüftung des Behälters, insbesondere für die Käsereifung, zu erhöhen.

Gemäß einer weiter bevorzugten Ausgestaltung kann die Bodenplatte und / oder die zumindest eine Seitenwand stoffeinstückig, insbesondere aus Kunststoff, vorzugsweise in einem Spritzguss- oder Rotomouldingverfahren, hergestellt sein. Bevorzugter Weise können thermoplastische Kunststoffe verwendet werden, insbesondere Polyethylen oder Polypropylen.

Es ist hiermit offenbart einen Behälter, insbesondere einen Behälter zur Käsereifung, besonders bevorzugt einen Behälter mit schwenkbaren/klappbaren Bodenrandabschnitten gemäß einem der vorgenannten Aspekte, mit einer Bodenplatte sowie schwenkbar an der Bodenplatte angelenkten Seitenwänden und / oder Seitenbegrenzungen (bspw. Säulen mit dazwischen verlaufenden Randleisten), die von einer aufgebauten Stellung aus nach innen zur Bodenplatte hin klappbar sind. Besagter Behälter weist zudem zumindest eine zentrale Hohlsäule auf, die von der Bodenplatte aus im Wesentlichen senkrecht emporragt und die in einem eingeklappten Zustand des Behälters in Höhenrichtung des Behälters gesehen über die zum Boden hin eingeklappten Seitenwände und / oder Seitenbegrenzungen hinausragt. Besagte zentrale Hohlsäule ist dabei konisch und zur Behälterunterseite hin offen ausgeführt, sodass die Hohlsäule mit einer Hohlsäule eines eingeklappten baugleichen oder kompatiblen Behälters nestbar ist. Bevorzugt kann die zentrale Hohlsäule integral mit der Bodenplatte gefertigt sein. Weiter bevorzugt kann die zentrale Hohlsäule eine umlaufende Auflagekante bzw. Stufe ausbilden, die eine definierte Auflagefläche beim Nesten von Hohlsäulen schafft und so einem Verkanten vorbeugt.

Gemäß einer bevorzugten Weiterbildung des vorgenannten Behälters kann die Bodenplatte rechteckförmig sein und zumindest die langen klappbaren Seitenwände / Seitenbegrenzungen können an ihrem oberen Rand bzw. ihrer Oberkante zur Hohlsäule komplementäre Einrückung aufweisen. Dies ermöglicht eine größere konstruktive Freiheit, insbesondere bei der Wahl der Höhe Seitenwände / Seitenbegrenzungen.

Außerdem kann die Bodenplatte gitterrostförmig ausgebildet sein, um die Durchlüftung des Behälters, insbesondere für die Käsereifung, zu erhöhen.

Gemäß einer bevorzugten Ausführungsform kann die zumindest eine zentrale Hohlsäule der Bodenplatte eine Anzahl in Längsrichtung der Hohlsäule bzw. in Höhenrichtung des Behälters verlaufender Lüftungsschlitze in ihrer Wandung aufweisen.

Gemäß einer bevorzugten Weiterbildung kann die Bodenplatte mit der zumindest einen zentralen Hohlsäule stoffeinstückig, insbesondere aus Kunststoff (Thermoplast), vorzugsweise in einem Spritzguss- oder Rotomouldingverfahren, hergestellt sein.

Es ist hiermit offenbart Behälter mit einer Bodenplatte und zumindest einer schwenkbar an dieser angelenkten klappbaren Seitenwand. Bodenplatte und Seitenwand sind zwei starre oder im Wesentlichen starre Komponenten, die mittels einer Scharnieranordnung miteinander verbunden sind. Die Seitenwand kann dabei von einer aufgebauten Stellung aus nach innen zur Bodenplatte hin eingeklappt werden. Die zumindest eine Seitenwand ist dergestalt, dass sie einen Wandabschnitt und einen Bodenabschnitt aufweist. Diese Unterteilung ist so zu verstehen, dass in der aufgebauten Stellung der Seitenwand der Seitenwandabschnitt eine Behälterwandung bzw. eine seitliche Begrenzung des Behälterbodens definiert, der Bodenabschnitt in der aufgebauten Stellung der Seitenwand einen Randabschnitt der Behälterbodenpartie ausbildet. Dabei ist der Bodenabschnitt derart gelenkig mit der Bodenplatte des Behälters verbunden ist, dass die durch die Scharniervorrichtung definierte Schwenkachse von oben betrachtet die Behälterbodenpartie unterteilt.

### Kurzbeschreibung der Zeichnungen

Die vorliegende Erfindung wird im Folgenden anhand bevorzugter Ausführungsbeispiele unter Bezugnahme auf die beigefügten Zeichnungen näher beschrieben. Es zeigen:
Fig. 1 eine perspektivische Darstellung eines Behälters gemäß einer bevorzugten Ausführungsform der Erfindung;
Fig. 2A eine schematische Darstellung der Unterteilung der Bodenpartie des Behälters gemäß der bevorzugten Ausführungsform;
Fig. 2B eine schematische Darstellung der Unterteilung der Bodenpartie des Behälters mit demontierten Bodenrandabschnitten;
Fig. 3 eine Detailansicht eines Verriegelungsmechanismus des Behälters gemäß der bevorzugten Ausführungsform;
Fig. 4 eine perspektivische Darstellung des Behälters gemäß der bevorzugten Ausführungsform mit eingeklappten Stirnseiten;
Fig. 5 eine perspektivische Darstellung des Behälters gemäß der bevorzugten Ausführungsform mit über den Stirnseiten eingeklappten Längsseiten;
Fig. 6 eine Detailansicht eines Eckbereichs des Behälters gemäß der bevorzugten Ausführungsform;
Fig. 7 eine Detailansicht einer ersten Scharnieranordnung des Behälters gemäß der bevorzugten Ausführungsform;
Fig. 8 eine Detailansicht einer zweiten Scharnieranordnung des Behälters gemäß der bevorzugten Ausführungsform;
Fig. 9 und Fig. 10 Ansichten eines Stapels eingeklappter Behälter gemäß der bevorzugten Ausführungsform; und
Fig. 11 einen aufgebauten Behälter gemäß der bevorzugten Ausführungsform, der mit kompatiblen starren Behältern einen Stapel bildet.

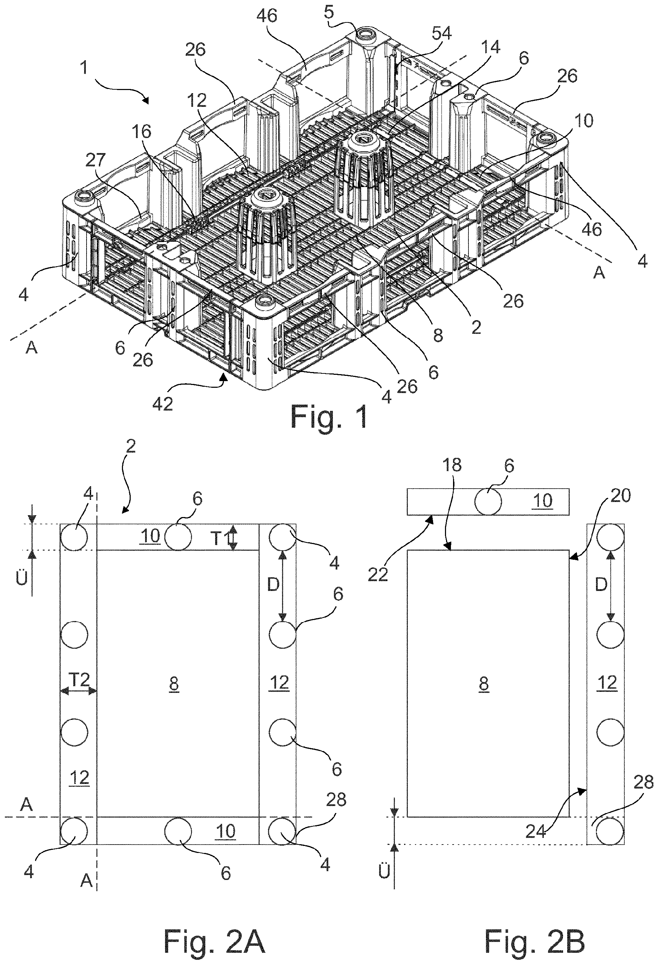

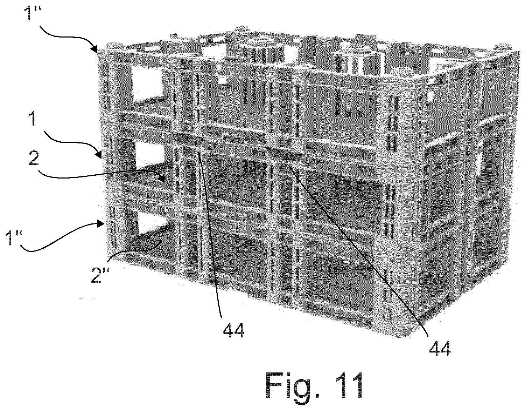

In Fig. 1 ist eine erste Ausführungsform eines erfindungsgemäßen Behälters 1, in diesem Fall ein Tray zum Transport und zur Reifung von Käselaiben, dargestellt. Solche Behälter 1 können übereinandergestapelt eine Art modulares Regalsystem zur Käsereifung bilden, wie es in Fig. 11 zu sehen ist. Hierzu haben die Behälter 1, 1" je einen Boden bzw. eine Bodenpartie 2, 2", die beim Übereinanderstapeln mehrerer Behälter 1, 1" regalbrettartige Lagerflächen für die Lagerung von Käselaiben ausbilden. Die entsprechenden Böden werden im gestapelten Zustand von peripheren Säulen bzw. Stützelementen gestützt/getragen. Zur Unterstützung der Luftzirkulation ist der Boden 2 des dargestellten Behälters 1 gemäß der bevorzugten Ausführungsform perforiert. Im dargestellten Ausführungsbeispiel ist die Boden 2 nach Art eines Gitterrosts ausgebildet, um die Luftzufuhr zum Käse zu maximieren.

Der modulare Aufbau solcher Regale zur Käsereifung hat gegenüber althergebrachten Regalsystemen den Vorteil, dass die einzelnen Behälter 1, 1" vor und nach der Käsereifung als Transportbehälter fungieren können und zudem nach Gebrauch in einer Behälterwaschanlage automatisiert reinigbar sind. Dies vermindert den Reinigungsaufwand im Vergleich mit herkömmlichen Regalsystemen erheblich.

Wie in Fig. 11 gut zu erkennen ist, verbraucht ein Stapel säulenverstärkter Behälter 1, 1" zu Käsereifung im Leerzustand ein erhebliches Volumen, was für einen effizienten Transport von Nachteil ist. Es ist deshalb ein lange bestehendes Problem im Stand der Technik, einen Behälter 1 für ein modulares Käsereifungssystem bzw. einen säulenverstärkten Behälter 1 im Allgemeinen bereitzustellen, dessen Volumen für einen Leertransport komprimierbar ist.

Der in Fig. 1 dargestellte Behälter gemäß der bevorzugten Ausführungsform weist wie bereits erwähnt einen Boden 2 (eine Gesamtbodenpartie), vier im Wesentlichen senkrecht zum Boden ausgerichtete (sich in Vertikalrichtung des Behälters 1 erstreckende) Ecksäulen oder -stützen 4 in den Ecken des Bodens 2 sowie eine Anzahl von Randsäulen oder -stützen 6, die entlang der äußeren Seitenkanten des Bodens 2 angeordnet sind, auf. In der Fig. 1 ist der Behälter 1 in einer aufgebauten Stellung abgebildet, in der die Säulen im Wesentlichen vertikal ausgerichtet sind. Diese Säulen 4, 6 sind als Hohlsäulen ausgeführt und verleihen dem Behälter 1, 1 die nötige Stabilität um zu hohen Käsereifungsregalen aufgestapelt zu werden. Zur seitlichen Begrenzung des Bodens 2 bzw. des Behälterinnenraums sind die Säulen 4, 6 jeweils mit Randleisten 26 verbunden, sodass eine geschlossene Behälterumrandung gebildet wird.

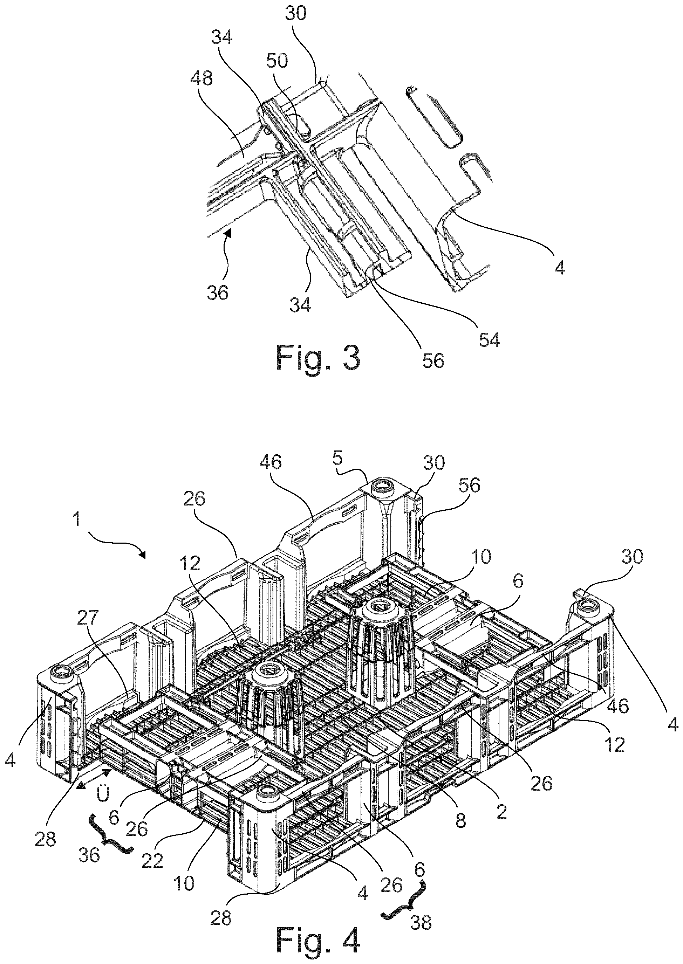

Im gestapelten Zustand des Behälters 1 werden die Stapellasten hauptsächlich durch die Ecksäulen 4 und die stirnseitigen Randsäulen 6 übertragen. Um eine sichere Stapelung zu ermöglichen, sind komplementäre Stapelgeometrien 5 an den Ober- und Unterseiten der Ecksäulen 4 vorgesehen, die dazu angepasst sind, ineinander einzutauchen und einen formschlüssigen Eingriff in Horizontalrichtung des Behälters 1 (parallel zur Fläche des Bodens 2) herzustellen. Im dargestellten Behälter 1 sind zu diesem Zweck an den Oberseiten der Ecksäulen 4 ringförmige Stapelvorsprünge vorgesehen, die in die nach unten hin offenen Hohlprofile der Ecksäulen 4 eintauchen können (vgl. z.B. Fig. 4, in der die Ecksäulen 4 von unten zu sehen sind).

Im Stand der Technik ist es bei Faltbehältern üblicherweise so, dass die Scharnierleisten entlang der äußeren Ränder des Behälterbodens verlaufen und die Seitenwände vertikal über der Scharnierachse stehen. Ein Paar gegenüberliegender Scharnierleisten ist in der Regel an einem erhöhten Bodenrand angeordnet, damit die Schwenkachsen gegenüber der Bodenfläche erhöht sind und die zugehörigen Wände über die das andere Paar gegenüberliegender Seitenwände in eine bodenparallele Stellung geklappt werden kann. Säulenverstärkte Behälter konnten im Stand der Technik bislang nicht als Faltbehälter ausgeführt werden, da die vergleichsweise große Tiefendimension der Säulen (Das Vorspringen der Säulen in Richtung hin zur Behältermitte) den Einsatz solcher gebräuchlicher Scharnieranordnungen für Faltbehälter verhindert.

In dem in der Fig. 1 abgebildeten Behälter 1 gemäß einer bevorzugten Ausführungsform der Erfindung ist deshalb der Boden 2 des Behälters 1 zur Bereitstellung einer Klapp- bzw. Faltfunktiontionalität aus verschiedenen schwenkbar verbundenen Segmenten 8, 10, 12 zusammengesetzt, sodass einzelne Segmente mitsamt der darauf angeordneten Säulen 4, 6 umklappbar sind. Diese Segmentierung/Unterteilung des Bodens 2 ist am besten in der schematischen Figur 2 zu erkennen. Im Detail weist der Boden 2 eine zentrale Bodenplatte 8 mit einer Rechteckform bzw. einem rechteckförmigen Grundriss sowie an jeder Seitenkante 18, 20 der Bodenplatte 8 schwenkbar angelenkte Bodenrandabschnitte 10, 12 auf. Auf den Bodenrandabschnitten 10, 12 sind jeweils durch Randleisten 26 verbundene Säulen 4, 6 angeordnet. Zur besseren Unterscheidung werden die Bodenrandabschnitte, die an den kurzen Seitenkanten 18 (an der Stirnseite) der Bodenplatte 8 angelenkt sind, im Folgenden als erste Bodenrandabschnitte 10 bezeichnet und die Bodenrandabschnitte, die an den langen Seitenkanten 20 der Bodenplatte 8 angelegt sind, werden entsprechend als zweite Bodenrandabschnitte 12 bezeichnet.

Wie in Fig. 2A gut zu sehen ist, ergeben die zentrale Bodenplatte 8 sowie die an deren Seitenkanten 18, 20 angelenkten Bodenrandabschnitte 10, 12 in der Gesamtheit einen rechteckförmigen Grundriss des Bodens 2. Um diesen rechteckförmigen Grundriss zu vervollständigen, ragen die längeren zweiten Bodenrandabschnitte 12 zu beiden Seiten über die jeweils an diese angrenzenden langen Seitenkanten 20 der Bodenplatte 8 hinaus und zwar genau um die Distanz, die der Tiefenerstreckung T1 der ersten Bodenrandabschnitte 10 an den Stirnseiten entspricht. In den Figuren 1 2A und 2B ist dieser Überstand der überstehenden Eckabschnitte 28 mit dem Bezugszeichen Ü bezeichnet. Fig. 2B ist eine schematische Explosionszeichnung, die die Zuordnung der Seitenkanten 18, 20, 22, 24 verdeutlichen soll. Die Kanten 18 bezeichnen die kurzen, stirnseitigen Kanten der Bodenplatte 8, Kanten 20 die Kanten der Längsseiten der Bodenplatte. Kanten 22 bezeichnen die an die kürzeren Seitenkanten 18 der Bodenplatte 8 angrenzenden Seitenkanten der ersten Bodenrandabschnitte 10 und Kanten 24 bezeichnen die an die längeren Seitenkanten 20 der Bodenplatte 8 angrenzenden Seitenkanten der zweiten Bodenrandabschnitte 12.

Zusammengefasst ermöglicht die oben beschriebene Anordnung, dass Randbereiche (Randabschnitte 10, 12) der Gesamtbodenpartie 2 des Behälters 1 mitsamt der darauf angeordneten Säulen 4, 6 und der die Säulen verbindenden Randleisten 26 unter Verkleinerung des Grundrisses/der Auflagefläche des Behälters 1 auf die zentrale Bodenplatte 8 umklappen. Die Schwenkachsen A dieser Bodenrandabschnitte 10, 12, die den Boden 2 in der Draufsicht unterteilen verlaufen zu diesem Zweck innerhalb der (fluchtenden) Innenkanten der Säulen 4, 6 (vgl. Fig. 2).

In Fig. 1 ist gut zu erkennen, dass die Säulen 4, 6 jeweils mittels Randleisten 26 verbunden sind. Die Randleisten 26 verbinden die Säulen 4, 6 jeweils außenseitig, d. h. die Randleisten 26 verlaufen jeweils zwischen zwei benachbarten Säulen 4, 6 so, dass ihre Außenseiten bündig mit den Außenseiten der Säulen 4, 6 angeordnet sind. Zudem sind die Oberkanten bzw. die Oberseiten der Randleisten 26 in etwa auf Höhe der Oberseiten der Ecksäulen 4 angeordnet. Im dargestellten Ausführungsbeispiel sind die Oberseiten der Randleisten 26 um wenige Millimeter gegenüber den Oberseiten der Ecksäulen 4 zurückgesetzt, damit die Oberseiten der Ecksäulen 4 eine definierte Stapelfläche ausbilden. Um die rechteckförmige Außenkontur des gesamten Bodens 2 verläuft im dargestellten Ausführungsbeispiel ein erhöhter Bodenrand 27, der in Vertikalrichtung des Behälters 1 gesehen unterhalb der Randleisten 26 angeordnet ist. In dem in Fig. 1 dargestellten Behälter 1 gemäß der bevorzugten Ausführungsform ragen die Säulen 4, 6 verglichen mit den Randleisten 26 deutlich weiter in das Behälterinnere hinein (haben eine größere Erstreckung in Behältertiefenrichtung). Der vergleichsweise große Querschnitt der Säulen 4, 6 ist nötig, um eine ausreichende Stabilität zum Aufnehmen hoher Stapellasten bereitzustellen. Die Bodenrandabschnitte 10, 12, die auf ihnen angeordneten Säulen 4, 6 sowie die die Säulen 4, 6 verbindenden Randleisten 26 sind jeweils als starre, stoffeinstückig gefertigte (spritzgegossene) Komponenten ausgebildet.

Wie in Fig. 1 und in Fig. 2A gut zu sehen ist, sind die Ecksäulen 4 auf den vorstehend beschriebenen überstehenden Eckabschnitten 28 der zweiten Bodenrandabschnitte 12 angeordnet. Die längeren zweiten Bodenrandabschnitte 12 weisen darüber hinaus je zwei Randsäulen 6 auf, die mit äußeren Seitenkanten bündig an den Außenkanten der zweiten Bodenrandabschnitte 12 anliegen und jeweils um eine vorbestimmte Distanz D von den benachbarten Ecksäulen 8 entfernt sind. Die kürzeren ersten Bodenrandabschnitte 10 weisen jeweils mittig (entlang einer Längs-Symmetrieachse des Behälters 1) eine Randsäule 6 auf, die ebenfalls bündig mit den äußeren Seitenkanten der ersten Bodenrandabschnitte 10 abschließen und sich so in die rechteckförmige (quaderförmige) Außenkontur des Behälters 1 einfügen.

Dadurch, dass die Säulen 4, 6 weiter ins Behälterinnere vorspringen als die äußeren Randleisten 26, bildet sich eine Anzahl von Buchten oder Abteile zur Aufnahme von Käselaiben. Je zwei benachbarte Säulen 4, 6 bilden zusammen mit der sie verbindenden Randleiste 26 eine solche Bucht aus, die jeweils dazu angepasst ist, einen konvexen Käselaib-Randabschnitt zu beherbergen. Die Randleisten 26 an den langen Seitenwänden des Behälters (an den zweiten Bodenrandabschnitte) weisen zu diesem Zweck an ihren zur Behälterinnenseite gewandten Seitenflächen teilkreisförmige konkave Ausnehmungen 46 auf, die bspw. in Fig. 1 zu sehen sind. Auf diese Weise sind im dargestellten Behälter 1 sechs Abteile für Käselaibe ausgebildet, die zusätzlich durch zwei in Behälterbreitenrichtung mittig und in Behälterlängsrichtung auf Höhe der Randsäulen 6 der zweiten Bodenrandabschnitte 12 angeordnete, von der zentralen Bodenplatte 8 emporragende Hohlsäulen bzw. Mittensäulen 40 definiert werden.

Wie z.B. in den Figuren 1, 3 oder 4 zu erkennen ist, erstrecken sich von den Ecksäulen 4, die auf den überstehenden Eckabschnitten 28 der zweiten Bodenrandabschnitte 12 angeordnet sind, rechtwinklige bzw. L-förmige Seitenrandabschnitte 30 in Richtung hin zu den ersten Bodenrandabschnitten 10. In anderen Worten haben die sich grundsätzlich in Behälterlängsrichtung erstreckenden zweiten Bodenrandabschnitte 12 an ihren beiden Enden quer zur Behälterlängsrichtung verlaufende Seitenrandabschnitte oder Auskragungen 30, die die Lücke zu den Seitenrandabschnitten der ersten Bodenrandabschnitte 10 schließen. In der dargestellten bevorzugten Ausführungsform hintergreifen die L-förmigen Seitenrandabschnitte 30 die Seitenrandabschnitte 34 behälteraußenseitig und schaffen so einen definierten Anschlag für die die ersten Bodenrandabschnitte in deren aufgebauten Position. Die Seitenrandabschnitte 34 sind, wie in Fig. 4 gut zu sehen ist, als vertikale Streben ausgebildet, die die Randleisten 26 mit den ersten Bodenrandabschnitten 10 verbinden.

In Fig. 3 ist im Detail dargestellt, wie die L-förmigen Seitenrandabschnitte 30 mit den Seitenrändern 34 der stirnseitigen ersten Seitenbegrenzungen 36, die auf den ersten Bodenrandabschnitten 10 angeordnet sind, eingreifen. An beiden ersten Seitenbegrenzungen 36 ist zum einen je ein Verriegelungsmechanismus 32 angeordnet. Dieser weist im dargestellten Ausführungsbeispiel zu beiden Seiten hin je einen entgegengesetzt wirkenden Riegel 48 an jeder der ersten Seitenbegrenzungen 36 auf, die jeweils in einen Riegelaufnahme 50 an einem angrenzenden L-förmigen Seitenrandabschnitt 30 der benachbarten zweiten Seitenbegrenzungen 38 eingreifen. Die Riegel 48 werden jeweils durch ein Vorspannelement 52 (bspw. integrale Blattfedern; hier nicht dargestellt) in Richtung hin zu ihrer jeweiligen Riegelaufnahme 50 gedrängt. Solange die Riegel 48 in ihre jeweiligen Riegelaufnahmen 50 eingreifen, verhindern diese per Formschluss ein Einklappen der Stirnseiten also der ersten Bodenrandabschnitte 10 bzw. der ersten Seitenbegrenzungen 36 zur Bodenplatte 8 hin. An den Seitenrandabschnitten 34 der ersten Seitenbegrenzungen 36 sind zudem erste Sicherungsgeometrien 54 (hier Ausnehmungen, siehe Fig. 1) ausgebildet, in welche im aufgebauten Zustand des Behälters 1 komplementäre zweite Sicherungsgeometrien 56 (hier Vorsprünge, siehe Fig. 2) der angrenzenden L-förmigen Seitenrandabschnitten 30 eingreifen und einen Formschluss in Behälterbreitenrichtung erzeugen. In anderen Worten bilden die L-förmigen Seitenrandabschnitte 30 der zweiten Seitenbegrenzungen 38 auf den zweiten Bodenrandabschnitten 12 einen Anschlag für die ersten Seitenbegrenzungen 36 auf den ersten Bodenrandabschnitten 1 aus, der die ersten Seitenbegrenzungen gegen ein Schwenken nach außen abstützt, und die ersten Sicherungsgeometrien 54 der ersten Seitenbegrenzungen 36 wirken mit den zweiten Sicherungsgeometrien 56 der zweiten Seitenbegrenzungen 38 zusammen und sichern somit zweiten Seitenbegrenzungen 38 gegen ein Schwenken nach außen ab.

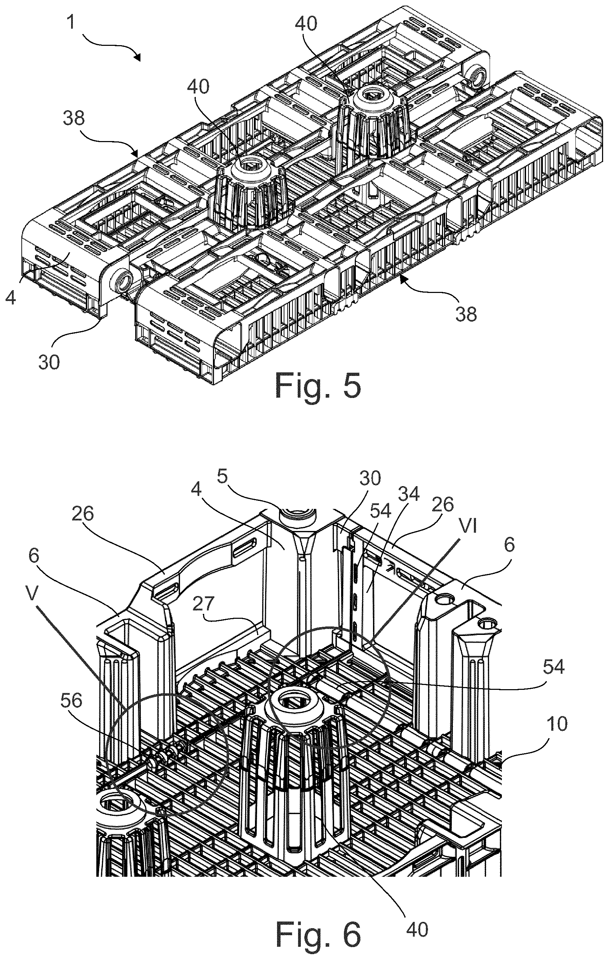

In den Figuren 4 und 5 ist ein Klappvorgang zum Einklappen des dargestellten Behälters 1 gemäß der bevorzugten Ausführungsform schrittweise dargestellt. Die Säulen 6 und Randleisten 26 an den Stirnseiten des Behälters 1 werden im Folgenden der Einfachheit halber als eine erste Seitenbegrenzung 36 des Behälters 1 zusammengefasst und die Säulen 4, 6 und Randleisten 26 an den Längsseiten werden der Einfachheit halber als eine zweite Seitenbegrenzung 38 des Behälters 1 zusammengefasst.

Wie in Fig. 4 zu erkennen ist, werden zunächst die Stirnseiten, also die ersten Bodenrandabschnitte 10 mitsamt den ersten Seitenbegrenzungen 36 eingeklappt. Die der Bodenplatte 8 zugewandten Seitenkanten 22 der (rechteckförmigen) ersten Bodenrandabschnitte 10 entsprechen in ihrer Länge den kurzen Seitenkanten 18 der Bodenplatte 8 an denen sie schwenkbar angelenkt sind. Die Schwenkachse der ersten Bodenrandabschnitte 10 verläuft jeweils parallel zu den Seitenkanten 18, 22 und angrenzend zu den jeweiligen Innenkante der auf den ersten Bodenrandabschnitten 10 angeordneten Randsäulen 6. Die ersten Bodenrandabschnitte 10 werden nach innen auf die Bodenplatte 8 geklappt bzw. geschwenkt, sodass die zur Behälterinnenseite gewandte Seite der jeweilig zugeordneten Randsäulen 6 auf der Oberfläche der Bodenplatte 8 zum Aufliegen kommt. Da die ersten Bodenrandabschnitte 10 in diesem eingeklappten Zustand hochklappen und senkrecht zur Bodenplatte 8 stehen, entsteht eine Lücke in der Gesamtbodenpartie 2, die in ihrer Tiefenerstreckung zum Behälterinneren hin im Wesentlichen dem bereits erwähnten Überstand Ü entspricht.

Wie in Fig. 5 dargestellt ist, werden in einem nächsten Schritt die Längsseiten, also die zweiten Bodenrandabschnitte 12 mit den darauf angeordneten zweiten Seitenbegrenzungen 38 über die eingeklappten Stirnseiten bzw. ersten Bodenrandabschnitte 10 geklappt. Um dies zu ermöglichen, wurden im dargestellten Behälter 1 gemäß der bevorzugten Ausführungsform die zwei nachfolgend beschriebenen konstruktiven Anpassungen getätigt.

Erstens ist die Distanz D zwischen den Ecksäulen 4 und den zu diesen jeweils benachbarten Randsäulen 6 der zweiten Bodenrandabschnitte 12 derart mit der Höhe der Säulen 4, 6 und der Randleisten 26 abgestimmt, dass die eingeklappten ersten Bodenrandabschnitte 10 zwischen diesen aufgenommen werden. Ebenfalls ist die Tiefenerstreckung (T2 in Fig. 2) (der Abstand zwischen Außenkante und Innenkante/Schwenkachse) der zweiten Bodenrandabschnitte 12 zu diesem Zweck etwas größer als die Tiefenerstreckung (T1 in Fig. 2) der ersten Bodenrandabschnitte 10. Im dargestellten Beispiel, haben alle Randsäulen 6 in etwa dieselbe Tiefenerstreckung bzw. einen identischen oder ähnlichen Querschnitt und die Tiefenerstreckung T2 der zweiten Bodenrandabschnitte 12 ist in etwa um die Wandstärke der Randleisten 26 größer als die Tiefenerstreckung T1 der ersten Bodenrandabschnitte 10. Folglich sind die Säulen 4, 6 der zweiten Bodenrandabschnitte 12 im umgeklappten Zustand um eine gewisse Distanz, die in diesem Beispiel im Wesentlichen der Wandstärke der Randleisten 26 entspricht, weiter von der Bodenplatte 8 entfernt als die Säulen 6 der ersten Bodenrandabschnitte 10, sodass die Innenflächen der Randleisten 26 der zweiten Seitenbegrenzungen 38 (der Längsseiten) im umgeklappten Zustand flächig auf den Außenseiten der Säulen 6 und der Randleisten 26 der ersten Bodenrandabschnitte zur Auflage kommen können. In anderen Worten ist die Tiefenerstreckung T2 der zweiten Bodenrandabschnitte 12 etwas größer als die die Tiefenerstreckung T1 der ersten Bodenrandabschnitte 10, um zu ermöglichen, dass die Säulen 4, 6 und Randleisten 26 in eine parallel zur Bodenplatte 8 ausgerichtete Lage überführt werden können.

Zweitens sind die durch die Säulen 4, 6 und die Randleisten ausgebildeten zweiten Seitenbegrenzungen 38 der zweiten Bodenrandabschnitte 12 in Behälterlängsrichtung gesehen auf Höhe der Mittensäulen 40 eingerückt bzw. ausgespart, da sie ansonsten bei ihrer Schwenkbewegung mit den Säulen 40 kollidieren würden. Wie in Fig. 4 gut zu sehen ist, sind die oberen Randkanten der längeren zweiten Seitenbegrenzungen 38 mit konkaven Einrückungen 44 versehen, die im umgeklappten Zustand die Mittensäulen 40 komplementär umfassen. In der dargestellten Ausführungsform sind hierzu die Randsäulen 6, der zweiten Bodenrandabschnitte 12 gegenüber den restlichen Säulen 4, 6 des Behälters 1 verkürzt ausgeführt.

Fig. 6 zeigt eine Detailansicht eines Eckbereichs des Behälters 1 gemäß der bevorzugten Ausführungsform. In dieser Figur ist gut zu erkennen, dass die Scharnieranordnungen bzw. Scharnierleisten 14, 16, mittels derer die Bodenrandabschnitte 10, 12 an den Rändern 18, 20 der Bodenplatte 8 angelenkt sind, unterschiedlich ausgeführt sind. Zudem ist gut zu erkennen, dass die Tiefenerstreckung bzw. die Erstreckung zwischen Außenkante und Innenkante aus den bereits vorstehend genannten Gründen bei den zweiten Bodenrandabschnitten 12 größer ausgeführt ist, als bei den ersten Bodenrandabschnitten 10.

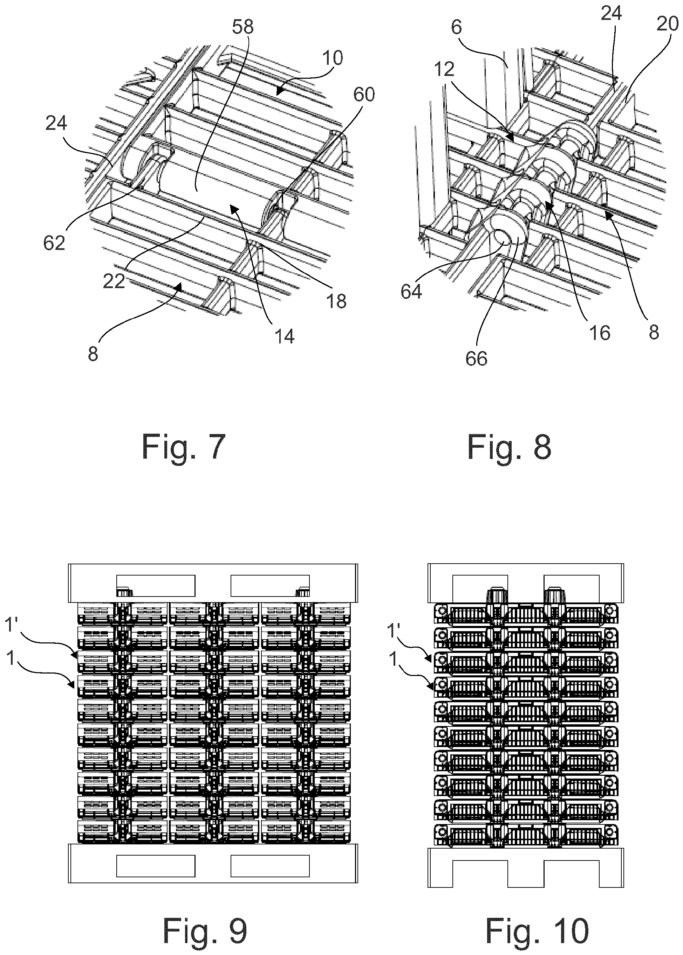

Fig. 7 zeigt eine Detailansicht einer ersten Scharnieranordnung/Scharnierleiste 14, die die ersten Bodenrandabschnitte 10 mit der kurzen Seitenkanten 20 der Bodenplatte 8 schwenkbar verbindet. Die ersten Scharnieranordnungen 14 sind jeweils aus Scharnierhülsen 58 und Scharnierbolzen 60 aufgebaut. Die ersten Bodenrandabschnitte 10 weisen in diesem Beispiel integral eingeformte Scharnierhülsen 58 auf. Diese sind geschlitzt ausgeführt, sodass die die Scharnierbolzen 60 lösbar in sie hineingeschnappt werden können. Die kurzen Seitenkanten 20 der Bodenplatte 8 weisen entsprechend die an Auslegern 62 integral angeformten Scharnierbolzen 60 auf. Die Schwenkachse A kann bei den ersten Scharnieranordnungen 14 konstruktionsbedingt (aufgrund der Aufhängung der Scharnierbolzen 60 an Auslegern 62) innerhalb der Seitenkante 20 verlaufend angeordnet sein.

Fig. 8 zeigt eine Detailansicht einer zweiten Scharnieranordnung/Scharnierleiste 16, die die zweiten Bodenrandabschnitte 12 mit den langen Seitenkanten 22 der Bodenplatte 8 schwenkbar verbindet. Die zweiten Scharnieranordnungen 16 weisen ebenfalls Scharnierbolzen 64 und Scharnierhülsen 66 auf. Bei den zweiten Scharnieranordnungen 16 ragen jedoch Scharnierbolzen 64 und Scharnierhülsen 66 über die Oberfläche des Bodens 2 (der Bodenplatte 8 und der zweiten Bodenrandabschnitte 12) hinaus, sodass die Schwenkachse A hier knapp über der Oberfläche des Bodens 2 verläuft. Dies hat den Vorteil, dass die Stirnseiten der angrenzenden Kanten 20, 24 in der aufgebauten Stellung der zweiten Bodenrandabschnitte 12 im Stoß liegen können (die Stirnseiten flächig aneinander anliegen können) und somit einen Anschlag ausbilden, der den zweiten Bodenrandabschnitten 12 mit den darauf angeordneten zweiten Seitenbegrenzungen 38 in der aufgebauten Stellung zusätzliche Stabilität (gegenüber einem Schwenken über die senkrechte Stellung der Säulen 4, 6 hinaus) verleiht. Im dargestellten Ausführungsbeispiel sind diese zweiten Scharnieranordnungen 16 zwischen der Bodenplatte 8 und den zweiten Bodenrandabschnitten 12 vorgesehen, da diese als erstes aufgeklappt werden und deshalb eine gewisse Stabilität benötigen, bevor die ersten und zweiten Sicherungsgeometrien 54, 56 der ersten und zweiten Seitenbegrenzungen 36, 38 ineinander eingreifen.

Wie in Fig. 5 am besten zu erkennen ist, stehen die Mittensäulen 40 in der eingeklappten Stellung der Bodenrandabschnitte 10,12 in Vertikalrichtung des Behälters gesehen über die umgeklappten Bodenrandabschnitte 10, 12 und Seitenbegrenzungen 36, 38 über. Um dennoch ein platzsparendes Stapeln von baugleichen umgeklappten Behältern 1, 1' gemäß der bevorzugten Ausführungsform zu ermöglichen, sind die Mittensäulen 40 nestbar ausgeführt. Konstruktiv sind die Mittensäulen 40 deshalb sowohl hohl als auch konisch ausgeführt, d. h. der Querschnitt der Mittensäulen 40 weitet sich in Richtung hin zur Bodenplatte 8 kontinuierlich auf. Zu ihrer Unterseite hin bzw. zur Unterseite 42 der Bodenplatte 8 hin, sind die Mittensäulen 40 zudem offen ausgeführt, sodass entsprechende Säulen 40' eines baugleichen oder kompatiblen Behälters 1' von unten in dieser eintauchen können. Im dargestellten Behälter 1, sind die Mittensäulen 40 mit in Vertikalrichtung des Behälters verlaufenden Lüftungsschlitzen 48 versehen, um die Luftzirkulation bei der Käsereifung weiter zu verbessern.

Die Figuren 9 und 10 zeigen einen Stapel mit einer Vielzahl zusammengefalteten Behältern 1, 1' entsprechend dem diskutierten bevorzugten Ausführungsbeispiel. Die Seitenbegrenzungen 36, 38 der Behälter sind jeweils umgeklappt und die Mittensäulen 40 in den Boden 2' des jeweils darüberliegenden Behälters 1' eingetaucht. Wie dargestellt ist, können die komprimierten Behälterstapel für den Transport jeweils von oben und von unten mit Paletten eingefasst sein.

In Fig. 11 ist ein gestapelter Behälter 1 gemäß der vorliegenden Erfindung dargestellt. Genauer gesagt ist in der Fig. 10 ein Behälter 1 gemäß der vorliegenden Erfindung zwischen 2 kompatiblen Behältern 1" gestapelt, die nicht über die erfindungsgemäßen schwenkbaren Bodenrandabschnitte 10, 12 verfügen. Der erfindungsgemäße Behälter 1 ist an den verkürzten Randsäulen 6 an der seiner Längsseite zu erkennen. Dieses Beispiel zeigt, dass es ohne weiteres möglich ist, einen erfindungsgemäßen klappbaren Behälter 1 so zu konstruieren, dass er auch mit bereits bekannten, einstückigen, säulenverstärkten Behältern 1" ohne Klappfunktion kompatibel ist.

Die vorstehend beschriebene bevorzugte Ausführungsform der Erfindung bezog sich auf ein spezialisiertes Tray zur Käsereifung. Selbstverständlich lässt sich das erfindungsgemäße Konzept auch auf andere Behälter übertragen, bspw. auf Behälter mit geschlossenen Seitenwänden und/oder Böden sowie auf Behälter ohne Mittensäulen.

### Bezugszeichenliste

- 1: Behälter;
- 2: Boden;
- 4: Ecksäule;
- 5: Stapelvorsprung;
- 6: Randsäule;
- 8: Bodenplatte;
- 10: erster Bodenrandabschnitt;
- 12: zweiter Bodenrandabschnitt;
- 14: erste Scharniervorrichtung;
- 16: zweite Scharniervorrichtung;
- 18: kurze Seitenkante der Bodenplatte;
- 20: lange Seitenkante der Bodenplatte;
- 22: Seitenkante des ersten Bodenrandabschnitts;
- 24: Seitenkante des zweiten Bodenrandabschnitts;
- 26: Randleiste;
- 27: erhöhter Bodenrand;
- 28: überstehende Eckabschnitte der zweiten Bodenrandabschnitte;
- 30: rechtwinkliger oder L-förmiger Seitenrandabschnitt der zweiten Bodenrandabschnitte;
- 32: Verriegelungsmechanismus;
- 34: Seitenrandabschnitt der ersten Bodenrandabschnitte bzw. ersten Seitenbegrenzungen;
- 36: erste Seitenwand / Seitenbegrenzung;
- 38: zweite Seitenwand / Seitenbegrenzung;
- 40: (zentrale) Hohlsäule der Bodenplatte / Mittensäule;
- 42: Bodenplattenunterseite;
- 44: Einrückungen;
- 46: konkave Ausnehmung;
- 48: Riegel;
- 50: Riegelaufnahme;
- 52: Vorspannelement;
- 54: erste Sicherungsgeometrie;
- 56: zweite Sicherungsgeometrie
- 58: Scharnierhülse der ersten Scharnieranordnung;
- 60: Scharnierbolzen der ersten Scharnieranordnung;
- 62: Ausleger;
- 64: Scharnierbolzen der zweiten Scharnieranordnung;
- 66: Scharnierhülse der zweiten Scharnieranordnung;
- A: Schwenkachse;
- D: Distanz;
- T1: Tiefenerstreckung der ersten Bodenrandabschnitte;
- T2: Tiefenerstreckung der zweiten Bodenrandabschnitte; und
- Ü: Überstand.

## Patentansprüche

1. Behälter (1), insbesondere Behälter zur Käsereifung, mit einem Boden (2), von dem Ecksäulen (4) und/oder Randsäulen (6) im Wesentlichen senkrecht emporragen und den Behälter (1) seitlich begrenzen, wobei der Boden (2) eine, insbesondere zentrale/mittige, Bodenplatte (8) aufweist, **dadurch gekennzeichnet, dass** der Boden (2) zumindest einen mit der zentralen/mittigen Bodenplatte (8) gelenkig verbundenen Bodenrandabschnitt (10, 12) aufweist, auf dem zumindest eine der Ecksäulen (4) und/oder Randsäulen (6) angeordnet ist und der zusammen mit der zumindest einen Ecksäule (4) und/oder Randsäule (6) von einer aufgebauten Stellung aus nach innen zur Bodenplatte (8) hin klappbar ist.

2. Behälter nach Anspruch 1,**dadurch gekennzeichnet, dass**
mehrere Ecksäulen (4) und/oder Randsäulen (6) über den zumindest einen Bodenrandabschnitt (10, 12) einstückig miteinander verbunden sind.

3. Behälter (1) gemäß Anspruch 1 oder 2, **dadurch gekennzeichnet, dass** eine Scharniervorrichtung (14, 16) zwischen angrenzenden Seitenkanten (18, 20, 22, 24) der Bodenplatte (8) und des zumindest einen Bodenrandabschnitts (10, 12) angeordnet ist und die durch die Scharniervorrichtung (14, 16) definierte Schwenkachse in oder oberhalb der Oberfläche des Bodens (2) und zwischen den angrenzenden Seitenkanten (18, 20, 22, 24) der Bodenplatte (8) und des Bodenrandabschnitts (10, 12) verläuft, sodass die Stoßflächen der Seitenkanten (18, 20, 22, 24) der Bodenplatte (8) und des Bodenrandabschnitts (10, 12) in der aufgebauten Stellung des Behälters (1) aneinander anliegen und einen definierten Anschlag ausbilden.

4. Behälter (1) gemäß einem der Ansprüche 1 bis 3, **dadurch gekennzeichnet, dass** der zumindest eine Bodenrandabschnitt (10, 12) eine Mehrzahl von Säulen (4, 6) aufweist und zwischen zwei benachbarten Säulen (4, 6) zumindest eine Randleiste (26) zur seitlichen Begrenzung des Bodens (2) in der aufgebauten Stellung verläuft.

5. Behälter (1) gemäß Anspruch 4, **dadurch gekennzeichnet, dass** die Randleiste (26) außenseitig zwischen benachbarten Säulen (4, 6) verläuft, sodass die Randleiste (26) und die benachbarten Säulen (4, 6) mit ihren zur Behälteraußenseite gerichteten Flächen im Wesentlichen bündig zueinander angeordnet sind und die Randleiste (26) gegenüber den Säulen (4, 6) eine reduzierte Tiefenerstreckung bzw. Wandstärke in Richtung zum Behälterinneren hin aufweist, sodass in der aufgebauten Stellung zwischen den benachbarten Säulen (4, 6) und der Randleiste (26) von oben betrachtet eine Aussparung oder Einbuchtung ausgebildet ist.

6. Behälter (1) gemäß einem der Ansprüche 1 bis 5, **dadurch gekennzeichnet, dass** die Bodenplatte (8) rechteckförmig ausgebildet ist und an jeder ihrer vier Seitenkanten der klappbare Bodenrandabschnitt (10, 12) mit jeweils zumindest einer Ecksäule (4) und/oder Randsäule (6) angeordnet ist.

7. Behälter (1) gemäß Anspruch 6, **dadurch gekennzeichnet, dass** zumindest ein Paar von sich gegenüberliegenden ersten Bodenrandabschnitten (10), insbesondere ein Paar von an den Behälterstirnseiten angeordneten kürzeren Bodenrandabschnitten, an seinen zur Bodenplatte (8) angrenzenden Seitenkanten (22) dieselbe Kantenlänge aufweist, wie die jeweiligen Seitenkanten (18) der Bodenplatte (8), an der es angelenkt ist und somit im montierten Zustand bündig mit der Bodenplatte (8) abschließt.

8. Behälter (1) gemäß Anspruch 7, **dadurch gekennzeichnet, dass** das verbleibende Paar sich gegenüberliegender zweiter Bodenrandabschnitte (12), insbesondere ein Paar langer Bodenrandabschnitte, an seinen zur Bodenplatte (8) angrenzenden Seitenkanten (24) eine größere Kantenlänge aufweist, als die Seitenkanten (20) der Bodenplatte (8), an der es angelenkt ist, sodass besagte zweite Bodenrandabschnitte (12) zu beiden Seiten über die angrenzenden Eckbereiche der Bodenplatte (8) um eine vorbestimmte Distanz (Ü) überstehende Eckabschnitte (28) ausbilden, die eine rechteckförmige Grundfläche des gesamten Bodens (2) vervollständigen und auf denen je eine Ecksäule (4) des Behälters (1) angeordnet ist.

9. Behälter (1) gemäß Anspruch 8, **dadurch gekennzeichnet, dass** von den auf den überstehenden Eckabschnitten (28) angeordneten Ecksäulen (4) rechtwinklig zur Erstreckungsrichtung des jeweiligen zweiten Bodenrandabschnitt (12) ausgerichtete bzw. L-förmige, Seitenrandabschnitte (30) vorspringen.

10. Behälter (1) gemäß Anspruch 9, **dadurch gekennzeichnet, dass** die rechtwinkligen oder L-förmigen, Seitenrandabschnitte (30) sich in der aufgeklappten Stellung zumindest teilweise mit Randabschnitten (34) der angrenzenden ersten Bodenrandabschnitte (10) überlappen und für diese einen Anschlag ausbilden, der die Schwenkbewegung der besagten ersten Bodenrandabschnitten (10) nach außen hin begrenzt.

11. Behälter (1) gemäß einem der Ansprüche 1 bis 10, **dadurch gekennzeichnet, dass** er weiter einen Verriegelungsmechanismus (32) aufweist mittels welchem die ersten Bodenrandabschnitte (10) mit den angrenzenden zweiten Bodenrandabschnitten (12) in der aufgebauten Stellung des Behälters (1) lösbar arretierbar sind und der vorzugsweise an den rechtwinkligen oder L-förmigen, Seitenrandabschnitte (30) der zweiten Bodenrandabschnitte (12) und den angrenzenden Seitenrandabschnitten (34) der ersten Bodenrandabschnitte (10) angeordnet ist.

12. Behälter (1) gemäß zumindest den Ansprüchen 5 und 9, **dadurch gekennzeichnet, dass** die Höhenerstreckung der Randsäulen (6) und Randleisten (26) des Paares gegenüberliegender erster Bodenrandabschnitten (10) und der Abstand (D) zwischen den Ecksäulen (4) und je einer zur jeweiligen Ecksäule (4) benachbarten Randsäule (6) des Paares gegenüberliegender zweiter Bodenrandabschnitte (12) derart aufeinander abgestimmt sind, dass, wenn das Paar gegenüberliegender zweiter Bodenrandabschnitte (12) auf das Paar gegenüberliegender erster Bodenrandabschnitte (10) geklappt wird, das Paar gegenüberliegender erster Bodenrandabschnitte (10) jeweils zwischen den Ecksäulen (4) und den zu den Ecksäulen (4) benachbarten Randsäulen (6) des Paares gegenüberliegender zweiter Bodenrandabschnitte (12) aufgenommen wird.

## Claims

1. Container (1), in particular container for cheese ripening, comprising a bottom (2) from which corner columns (4) and/or edge columns (6) project substantially vertically and laterally delimit the container (1),
wherein the bottom (2) has an, in particular central/centered, bottom plate (8), **characterized in that**
the bottom (2) has at least one bottom edge portion (10, 12) which is connected in an articulated manner to the central/centered bottom plate (8) and on which at least one of the corner columns (4) and/or edge columns (6) is arranged and which, together with the at least one corner column (4) and/or edge column (6), can be folded inwards towards the bottom plate (8) from an assembled position.

2. Container according to claim 1, **characterized in that**
a plurality of corner columns (4) and/or edge columns (6) are integrally connected to each other via the at least one bottom edge portion (10, 12).

3. Container (1) according to claim 1 or 2, **characterized in that** a hinge device (14, 16) is arranged between adjacent side edges (18, 20, 22, 24) of the bottom plate (8) and of the at least one bottom edge portion (10, 12) and the pivot axis defined by the hinge device (14, 16) extends in or above the surface of the bottom (2) and between the adjacent side edges (18, 20, 22, 24) of the bottom plate (8) and of the bottom edge portion (10, 12), so that the abutting surfaces of the side edges (18, 20, 22, 24) of the bottom plate (8) and of the bottom edge portion (10, 12) rest against each other in the assembled position of the container (1) and form a defined stop.

4. Container (1) according to one of claims 1 to 3, **characterized in that** the at least one bottom edge portion (10, 12) has a plurality of columns (4, 6) and at least one edge strip (26) extends between two adjacent columns (4, 6) for lateral delimitation of the bottom (2) in the assembled position.

5. Container (1) according to claim 4, **characterized in that** the edge strip (26) extends on the outside between adjacent columns (4, 6), so that the edge strip (26) and the adjacent columns (4, 6) are arranged with their surfaces directed towards the outside of the container substantially flush with each other, and the edge strip (26) has a reduced depth or wall thickness in the direction towards the interior of the container compared with the columns (4, 6), so that in the assembled position, a recess or indentation is formed between the adjacent columns (4, 6) and the edge strip (26) when viewed from above.

6. Container (1) according to one of claims 1 to 5, **characterized in that** the bottom plate (8) is rectangular in shape and on each of its four side edges, the foldable bottom edge portion (10, 12) is arranged with at least one corner pillar (4) and/or edge pillar (6).

7. Container (1) according to claim 6, **characterized in that** at least one pair of opposing, first bottom edge portions (10), in particular a pair of shorter bottom edge portions arranged on the container end faces, has the same edge length at its side edges (22) adjacent to the bottom plate (8) as the respective side edges (18) of the bottom plate (8) to which it is hinged and thus closes flush with the bottom plate (8) in the assembled state.

8. Container (1) according to claim 7, **characterized in that** the remaining pair of opposing, second bottom edge portions (12), in particular a pair of long bottom edge portions, has at its side edges (24) adjacent to the bottom plate (8) a larger edge length than the side edges (20) of the bottom plate (8) to which it is hinged, so that said second bottom edge portions (12) form corner portions (28) projecting on both sides beyond the adjacent corner regions of the bottom plate (8) by a predetermined distance (U), said corner portions (28) completing a rectangular base surface of the entire bottom (2) and each having a corner column (4) of the container (1) arranged thereon.

9. Container (1) according to claim 8, **characterized in that** side edge portions (30), which have an L-shape or are respectively aligned at right angles to the direction of extension of the respective second bottom edge portion (12), project from the corner columns (4) arranged on the projecting corner portions (28).

10. Container (1) according to claim 9, **characterized in that** the rectangular or L-shaped side edge portions (30) in the unfolded position at least partially overlap with edge portions (34) of the adjacent first bottom edge portions (10) and form a stop for these, which limits the outward pivoting movement of said first bottom edge portions (10).

11. Container (1) according to one of claims 1 to 10, **characterized in that** it further comprises a locking mechanism (32) by means of which the first bottom edge portions (10) are releasably lockable with the adjacent, second bottom edge portions (12) in the assembled position of the container (1) and which is preferably arranged at the rectangular or L-shaped side edge portions (30) of the second bottom edge portions (12) and the adjacent side edge portions (34) of the first bottom edge portions (10).

12. Container (1) according to at least claims 5 and 9, **characterized in that** the height extension of the edge columns (6) and edge strips (26) of the pair of opposing, first bottom edge portions (10) and the distance (D) between the corner columns (4) and one edge column (6) each adjacent to the respective corner column (4) of the pair of opposing, second bottom edge portions (12) are coordinated with each other in such a manner that when the pair of opposing, second bottom edge portions (12) is folded onto the pair of opposing, first bottom edge portions (10), the pair of opposing, first bottom edge portions (10) is received between the corner columns (4) and the edge columns (6) of the pair of opposing, second bottom edge portions (12) adjacent to the corner columns (4), respectively.

## Revendications

1. Récipient (1), en particulier récipient pour la maturation de fromage, avec un fond (2) duquel des colonnes d'angle (4) et/ou des colonnes de bord (6) font saillie sensiblement verticalement et délimitent latéralement le récipient (1), dans lequel le fond (2) présente une plaque de fond (8), en particulier centrale/au milieu, **caractérisé en ce que** le fond (2) présente au moins une section de bord de fond (10, 12) qui est connectée de manière articulée à la plaque de fond centrale/au milieu (8), sur laquelle au moins une des colonnes d'angle (4) et/ou des colonnes de bord (6) est disposée et qui peut être rabattue vers l'intérieur, conjointement avec l'au moins une colonne d'angle (4) et/ou colonne de bord (6), vers la plaque de fond (8) à partir d'une position montée.

2. Récipient selon la revendication 1, **caractérisé en ce que** plusieurs colonnes d'angle (4) et/ou de colonnes de bord (6) sont connectées entre elles d'un seul tenant par l'intermédiaire d'au moins une section de bord de fond (10, 12).

3. Récipient (1) selon la revendication 1 ou 2, **caractérisé en ce qu'**un dispositif de charnière (14, 16) est disposé entre des bords latéraux adjacents (18, 20, 22, 24) de la plaque de fond (8) et l'au moins une section de bord de fond (10, 12) et l'axe de pivotement défini par le dispositif de charnière (14, 16) est situé dans ou au-dessus de la surface du fond (2) et entre les bords latéraux adjacents (18, 20, 22, 24) de la plaque de fond (8) et de la section de bord de fond (10, 12), de sorte que les surfaces de butée des bords latéraux (18, 20, 22, 24) de la plaque de fond (8) et de la section de bord de fond (10, 12) reposent l'une contre l'autre dans la position montée du récipient (1) et forment une butée définie.

4. Récipient (1) selon l'une quelconque des revendications 1 à 3, **caractérisé en ce que** l'au moins une section de bord de fond (10, 12) présente une pluralité de colonnes (4, 6) et entre deux colonnes adjacentes (4, 6) s'étend au moins un rebord (26) pour délimiter latéralement le fond (2) dans la position montée.

5. Récipient (1) selon la revendication 4, **caractérisé en ce que** le rebord (26) s'étend du côté extérieur entre des colonnes adjacentes (4, 6), de sorte que le rebord (26) et les colonnes adjacentes (4, 6) sont disposées avec leurs surfaces dirigées vers le côté extérieur du récipient sensiblement à ras les unes aux autres et le rebord (26) présente une profondeur ou une épaisseur de paroi réduite par rapport aux colonnes (4, 6) en direction de l'intérieur du récipient, de sorte qu'en position montée, un évidement ou une échancrure se forme entre les colonnes adjacentes (4, 6) et le rebord (26) lorsqu'il est vu de dessus.

6. Récipient (1) selon l'une quelconque des revendications 1 à 5, **caractérisé en ce que** la plaque de fond (8) est rectangulaire et la section de bord de fond rabattable (10, 12) est disposée sur chacun de ses quatre bords latéraux avec au moins une colonne d'angle (4) et/ou une colonne de bord (6) respectivement.

7. Récipient (1) selon la revendication 6, **caractérisé en ce qu'**au moins une paire de premières sections de bord de fond (10) opposées, en particulier une paire de sections de bord de fond plus courtes disposées sur les faces frontales du récipient, présente sur ses bords latéraux adjacents (22) à la plaque de fond (8) la même longueur de bord que les bords latéraux respectifs (18) de la plaque de fond (8) sur laquelle elle est articulée et se termine ainsi à ras de la plaque de fond (8) à l'état monté.

8. Récipient (1) selon la revendication 7, **caractérisé en ce que** la paire restante de secondes sections de bord de fond opposées (12), en particulier une paire de longues sections de bord de fond, présente sur ses bords latéraux adjacents (24) à la plaque de fond (8) une longueur de bord plus grande que les bords latéraux (20) de la plaque de fond (8) à laquelle elle est articulée, de sorte que lesdites secondes sections de bord de fond (12) forment des sections d'angle (28) faisant saillie des deux côtés au-delà des zones d'angle adjacentes de la plaque de fond (8) d'une distance prédéterminée (Ü), qui complètent une surface de base rectangulaire de l'ensemble du fond (2) et sur chacune desquelles est disposée une colonne d'angle (4) du récipient (1).

9. Récipient (1) selon la revendication 8, **caractérisé en ce que** des sections de bord latérales (30) alignées à angle droit par rapport à la direction d'extension de la seconde section de bord de fond (12) respective ou en forme de L dépassent des colonnes d'angle (4) disposées sur les sections d'angle (28) en saillie.

10. Récipient (1) selon la revendication 9, **caractérisé en ce que** les sections de bord latérales à angle droit ou en forme de L (30), en position déployée, chevauchent au moins partiellement les sections de bord (34) des premières sections de bord de fond adjacentes (10) et forment une butée pour celles-ci, qui limite le mouvement de pivotement vers l'extérieur desdites premières sections de bord de fond (10).

11. Récipient (1) selon l'une quelconque des revendications 1 à 10, **caractérisé en ce qu'**il présente en outre un mécanisme de verrouillage (32) au moyen duquel les premières sections de bord de fond (10) peuvent être verrouillées de manière amovible avec les secondes sections de bord de fond adjacentes (12) dans la position montée du récipient (1) et qui est de préférence disposé au niveau des sections de bord latérales à angle droit ou en forme de L (30) des secondes sections de bord de fond (12) et des sections de bord latérales adjacentes (34) des premières sections de bord de fond (10).

12. Récipient (1) selon au moins les revendications 5 et 9, **caractérisé en ce que** l'extension en hauteur des colonnes de bord (6) et des rebords (26) de la paire de premières sections de bord de fond opposées (10) et la distance (D) entre les colonnes d'angle (4) et une colonne de bord (6) adjacente à la colonne d'angle (4) respective de la paire de secondes sections de bord de fond opposées (12) sont adaptées l'une à l'autre de sorte que lorsque la paire de secondes sections de bord de fond opposées (12) est repliée sur la paire de premières sections de bord de fond opposées (10), la paire de premières sections de bord de fond opposées (10) est respectivement reçue entre les colonnes d'angle (4) et les colonnes de bord (6) de la paire de secondes sections de bord de fond opposées (12) adjacentes aux colonnes d'angle (4).
